Europäisches Patentamt

(19) European Patent Office

Office européen des brevets

(11) Publication number: **0 134 068**
**B1**

(12) **EUROPEAN PATENT SPECIFICATION**

(45) Date of publication of patent specification: **16.06.87**

(21) Application number: **84302938.0**

(22) Date of filing: **01.05.84**

(51) Int. Cl.⁴: **F 04 D 29/10, F 16 J 15/34**

(54) **Mechanical seal.**

(30) Priority: **19.05.83 US 496322**

(43) Date of publication of application:
**13.03.85 Bulletin 85/11**

(45) Publication of the grant of the patent:
**16.06.87 Bulletin 87/25**

(84) Designated Contracting States:
**CH DE FR GB LI NL**

(56) References cited:
**GB-A- 914 192**
**US-A-3 079 605**
**US-A-4 202 553**
**US-A-4 215 870**
**US-A-4 272 084**

(73) Proprietor: **BORG-WARNER CORPORATION**
**200 South Michigan Avenue**
**Chicago Illinois 60604 (US)**

(72) Inventor: **Marsi, Joseph Alexander**
**4926 Elkridge Drive**
**Rancho Palos Verdes California (US)**
Inventor: **Wiese, Winfred John**
**14821, Hayward Street**
**Whittier California (US)**
Inventor: **Boster, Clark Stephen**
**14426 Hayward Street**
**Whittier California (US)**
Inventor: **Takumi, Lawrence Ichiro**
**1833 E. Denwall Drive**
**Carson California (US)**
Inventor: **Colman, Alan Bruce**
**820, Magnolia Street**
**South Pasadena California (US)**
Inventor: **Vaghasia, Gordham Kanji**
**16412, Cherry Crest Circle**
**Cerritos California (US)**
Inventor: **Ellison, Jerel Emery**
**10429, LaReina Avenue Apt. A-1**
**Downey California (US)**

(74) Representative: **Williams, Trevor John et al**
**J.A. KEMP & CO. 14 South Square Gray's Inn**
**London WC1R 5EU (GB)**

Courier Press, Leamington Spa, England.

# Description

This invention relates to improvements in high pressure mechanical seal assemblies constructed and used to prevent the uncontrolled leakage of a liquid along a rotating shaft, as for example, leakage along the shaft of a rotary liquid pump.

The present invention was developed especially for use with nuclear reactor coolant pumps, boiler recirculating pumps, boiler feed pumps and pipeline pumps, and will meet the requirements for extreme and widely changing conditions of pressures and temperatures encountered in these uses, it being understood that the present invention can also be used in less demanding installations. As an example of the widely changing pressures and temperature, the normal operating pressure in a pressurized water reactor is about 15168 kPa (2200 psig), and during start-up the pressure can be as low as 138 to 207 kPa (20 to 30 psig). In such reactor, the water in a coolant loop can reach a temperature of about 316°C (600°F), while the water entering the seal area may be as low as about 26.7°C (80°F). In these pumps, the pump shaft may move axially and may also wobble or deflect radially. An additional rigorous operating condition for the seals in such application is the combination of high pressure and high surface speeds which result from large diameter parts. It is thus necessary to construct a mechanical seal assembly capable of performing under these operational conditions.

Mechanical seal assemblies usually comprise the combination of a rotatable seal ring connected to a rotatable shaft for rotation therewith and a non-rotatable or stationary seal ring connected to the flange of a housing. Each seal ring has a radial seal face and the seal faces oppose one another. Whether or not the seal faces engage one another is debatable because there is usually a film of fluid therebetween providing lubrication for the rotation of one of the faces. In many seal assemblies, one or more coil springs urge one of the rings toward the other, so that in reality, one or both of the seal rings are capable of limited axial movement, even though they are commonly referred to as "rotatable" or "stationary". Multiple stage seal assemblies comprising a plurality of seal assemblies are known in the art.

The prior art portion of claims is based on US—A—4272084 which describes a multiple stage mechanical seal assembly. The rotatable seal ring of each stage is connected by axial pins to a flange on a sleeve which, in turn, is connected to the rotatable shaft. Each stage has its own sleeve. The stationary seal ring of each stage is sealed to a carrier which is connected to a housing by an encircling elastomeric O-ring confined by a retainer ring and snap rings. A plurality of coil springs urge the stationary ring toward the rotatable ring in each stage. Each spring is received in a spring pocket, a part of which is in the carrier and a part of which is in the housing. No spring retainers are used.

The mechanical seal assembly of this invention is capable of performing its intended function under widely adverse operating conditions, and can be used singly or in multiple stages. The seal assembly is especially adapted for use in horizontal or vertical pumps, of the type previously described.

The present invention is characterized by the provision of a ring-like spring holder having front and rear surfaces; a plurality of spring pockets in said holder, some of which open to the front surface and some of which open to the rear surface, individual ones of said coil springs being received in said spring pockets; and means in said housing supporting said spring holder relative to said non-rotatable seal ring so that said springs are operative to urge the non-rotatable seal ring towards the rotatable seal ring. The provision of the spring holder with oppositely operating springs therein assists in ensuring reliable operation of the seal assembly under conditions of extreme and widely changing conditions of pressure and temperature. With the spring holder a greater stroke is readily attainable than would be the situation where the springs were simply received in pockets in facing seal assembly parts or were projecting from one side only of a spring holder.

As described in connection with the preferred embodiments, the spring holder is used to position a plurality of springs to resiliently urge the stationary seal ring toward the rotatable seal ring. The spring holder is positioned in an annular cavity in the pump housing and specifically in that part of the housing known as a seal flange. The spring holder is a ring having a radial front surface and a radial back surface with axially arranged pockets, each receiving a coil spring. Some spring pockets open to the front surface and some spring pockets open to the rear surface. Generally the front and rear pockets are offset and evenly spaced from one another. Usually there are equal numbers of front and rear pockets. This series arrangement of springs provides a substantially uniform spring load in the stationary seal ring and permits twice the axial movement of the pump shaft as would be permitted by the usual spring arrangement wherein the springs act in one direction without affecting the function of the seal assembly. The arrangement of springs according to this invention results in a relatively short (in axial length) and compact seal assembly.

The stationary seal ring is usually made of carbon and the rotatable seal ring is made of a harder material, such as titanium carbide, aluminum oxide and the like. The complete seal assembly is mounted on a shaft sleeve, so that it can be pre-assembled and then axially positioned on the shaft at the proper operating location.

In the preferred construction the stationary carbon seal ring is sealed, by spaced O-rings, to an encircling metal retainer. Also at least a portion of a face of the ring is covered by a radially inwardly directed flange on the retainer. Because the inside diameter of the stationary field ring is exposed to the lower pressure fluid and the retainer is exposed to the higher pressure fluid, the retainer substantially eliminates severe radial deflections of the carbon seal ring which could be caused by extreme pressure differentials on the inside and outside of the ring. The stationary seal ring is supported on a "balance" sleeve means surrounding and spaced from the shaft sleeve. The balance sleeve permits some angular movement or wobbling of the shaft so as to eliminate adverse effects of shaft misalignment which frequently occurs in pumps of the type described.

The rotating seal ring of the assembly is resiliently connected to the rotating shaft (or sleeve, as the case may be) by transversely positioned elastomeric keys which fit into pockets formed by transverse external flats formed on the seal ring and transverse grooves cut into the inside of a cylindrical lock ring. The grooves are in an axially extending portion of the lock ring which surrounds the rotating seal ring. The formation of the flats on the rotating seal ring avoids notching, and thus weakening, the real ring to receive the usual drive pins. The lock ring prevents the rotating seal ring from flying apart in case of its failure.

One way of carrying out the invention is described in detail below with reference to drawings which illustrate only one specific embodiment, in which:—

Fig. 1 is a partial cross-sectional view through a single stage mechanical seal assembly constructed according to this invention;

Fig. 1A is a partial cross-sectional view taken on line 1A of Fig. 1;

Fig. 2 is a perspective illustration of a spring holder for use in a seal assembly constructed according to this invention and showing the spring pockets with springs in some pockets;

Fig. 3 is an exploded view of the rotating seal ring, the lock ring and the resilient connection therebetween; and

Figs. 4A and 4B when laid end-to-end show a partial cross-sectional view through a multiple-stage mechanical seal assembly constructed according to this invention.

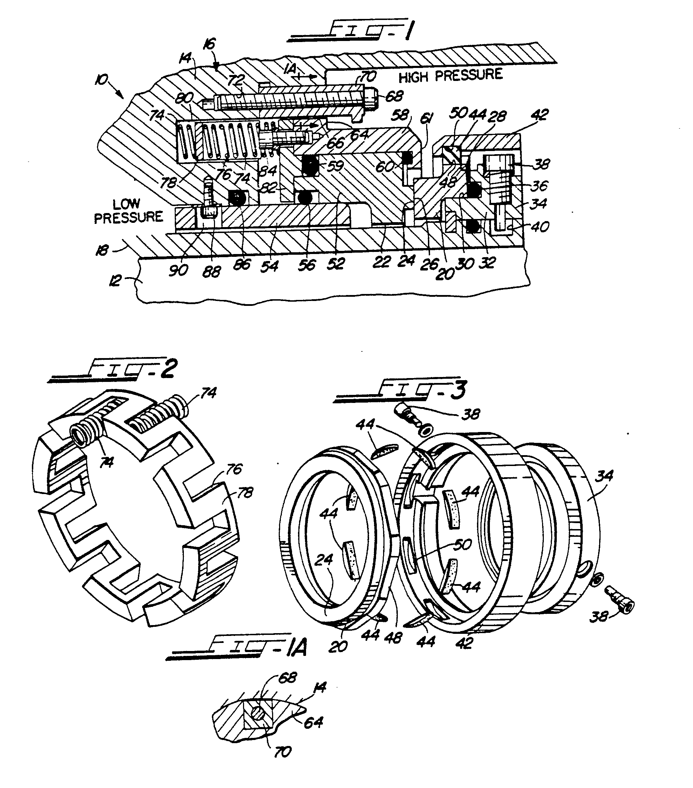

Fig. 1 illustrates a single stage machanical seal assembly 10 for use with a rotatable shaft 12 and a seal flange 14 of a housing 16, the assembly 10 comprising shaft sleeve 18, rotatable seal ring 20, and stationary seal ring 22, one of which is resiliently urged toward the other. Seal rings 20, 22 have relatively rotating, opposed, and lapped faces 24, 26 across which the flow of high pressure fluid in housing 16 to lower pressure zone (at the left of Fig. 1) is substantially prevented.

Ring 20 is provided with annular flange 28, the inner defining surface 30 of which is received on flange 32 of adaptor 34. The rear flange 28 is axially supported by O-ring 36 encircling adapter flange 32, to avoid undesirable effects of different radial deflections of ring 20 and flange 32 from operating conditions due to the difference in materials from which they are made. Cap screws 38 are threadably received in adaptor 34 and their ends are received in notches 40 in shaft sleeve 18, thus forming a driving connection between shaft sleeve 18 and adaptor 34.

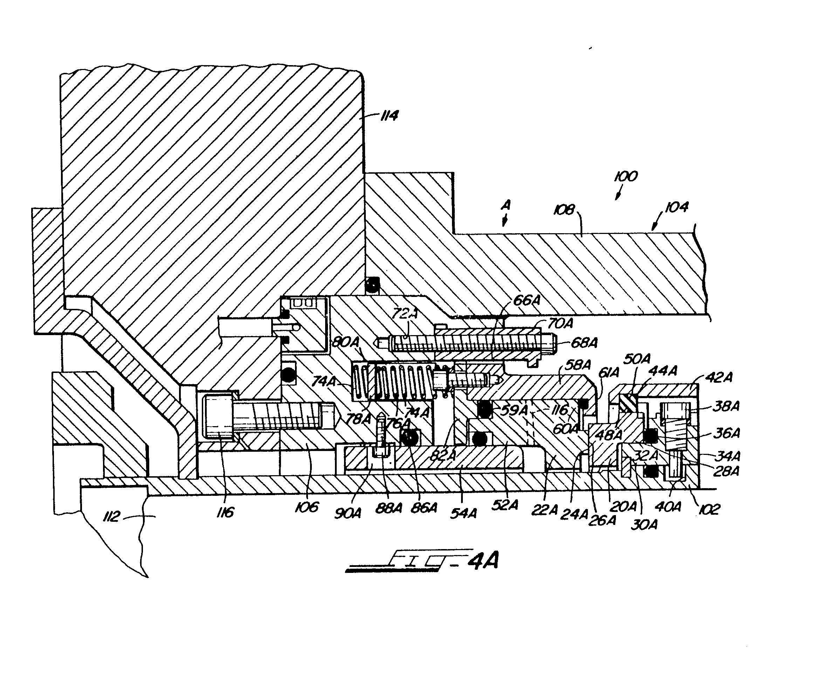

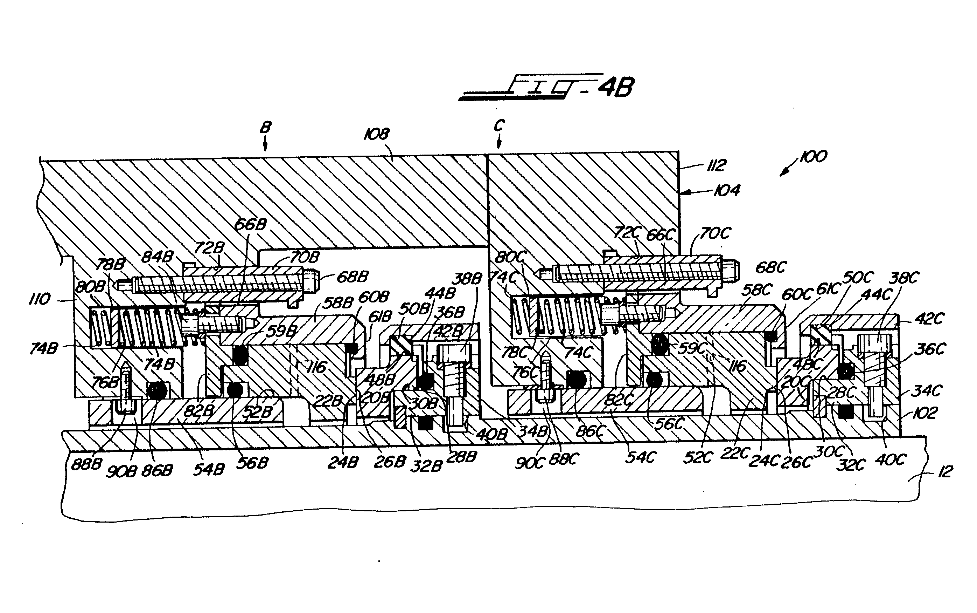

Lock ring 42 encircles adaptor 34 and also flange 28, and is connected thereto (see Fig. 3 also) by elastomeric keys 44 received in transverse pockets 46 defined by flats 48 on seal ring flange 28 and grooves 50 in lock ring 42. Keys 44 provide a resilient driving connection between lock ring 42, flange 34, sleeve 18, and seal ring 20 and cushion the drive therebetween. The resilient connection also axially locates seal ring 20 and lock ring 42 during their assembly. Cap screws 38 are enclosed by ring 42. Ring 42, by enshrouding seal ring 20, prevents it from flying apart in case of its failure.

Seal ring 22 has a rearwardly extending reduced inner diameter flange 52 partially encircling balance sleeve means 54. Seal ring 22 is centered on sleeve means 54 by O-ring 56 positioned between ring 22 and sleeve 54. O-ring 56 permits limited axial movement of ring 22 relative to sleeve 54. This arrangement also avoids undesirable effects of different radial deflections of ring 22 and sleeve 54 from operating conditions due to differences in their materials of construction. The outer circumference of seal ring 22 is encircled and sealed to retainer 58 by O-rings 59 and 60. Retainer 58 also has radially inwardly directed flange 61 extending over a portion of the front of seal ring 22. Retainer 58 substantially eliminates severe radial deflections of seal ring 22 which could be caused by extreme pressure differentials in the inside and outside of ring 22. The rear of retainer 58 has a radially outwardly extending flange 64 with notches or slots 66 therethrough. Cap screws 68 with surrounding keys 70 are slidably received in notches 66, the cap screws being also received in threaded openings 72 in seal flange 14, thus connecting seal ring 22 to flange 14 and preventing rotation of seal ring 22 relative to flange 14. Keys 70 are flanged at their outer ends to limit axial movement of seal ring 22 and retainer 58 during their assembly with seal flange 14.

Retainer 58, and thus seal ring 22, are resiliently urged toward the right, as in Fig. 1 by a plurality of usually identical coil springs 74, each received in a pocket 76 in spring holder 78 (see also Fig. 2). Spring holder 78 is positioned in annular cavity 80 in flange 14 and has a radial front surface and a radial back surface. Some pockets 76 open to the front surface while the others open to the rear surface. The spring force from springs 74 is applied to annular flange member 82 connected to retainer 58 by cap screws 84. The arrangement of springs 74 provides a substantially uniform spring load on the ring 22 under all operating conditions and permits twice the axial movement of the pump shaft compared to a more conventional spring arrangement wherein the springs are all facing in one direction. An O-ring 86 is positioned between balance sleeve means 54 and flange 14. Cap screw 88 threadably received in flange 14 and in enlarged slot 90 in sleeve 54 axially and radially positions sleeve 54 with respect to flange 14. O-ring 86 provides a hydraulic seal between sleeve means 54 and flange 14. Because sleeve means 54 is spaced from sleeve 18 and thus also from shaft 12, shaft wobble or misalignment will not affect the alignments of stationary seal ring 22 and its associated parts.

Seal ring 20 is preferably made of carbon and seal ring 22 is preferably made of a harder material, such as titanium carbide, silicon carbide, and the like. The remainder of the assembly, except for the elastomeric O-rings and keys 44, is generally made of suitable metal, depending upon the environment in which the assembly is to be used.

Figs. 4A and 4B when laid end-to-end illustrate a multiple stage mechanical seal assembly identified as 100, each stage comprising individual seal assemblies A, B and C. Each stage is essentially identical in construction. Differences, if any, are generally in the housing parts with which the stages are associated. Sleeve 102 is continuous and extends the length of the assembly 100. Housing 104, of multiple parts, comprises plug 106, generally cylindrical part 108 with a generally centrally located flange 110, and separate end flange 112. Flange 114 is connected to plug 106 by cap screws 116 and the function of the plug 106 is essentially the same as previously described seal flange 14. Flanges 110 and 112 also function the same as seal flange 14.

The remainder of the parts are the same in each stage as in the Fig. 1 assembly except that each stationary seal ring is provided with a radial passage 116, so as to permit any seepage of fluid into a zone between seal rings 22A, 22B, and 22C and their retainers 58A, 58B and 58C to flow to the flow pressure side of the seal. This prevents any pressure build-up between seal ring 22A, 22B and 22C and retainers 58A, 58B and 58C which could damage ring 22. Generally a passage such as 116 is not necessary in a single stage seals but may be used therein if desirable. The parts in Figs. 4A and 4B are identified using a suffix A, B or C depending upon the stage in which they are a part and reference is made to the description of the various parts. Suffice to say the essential features of the single stage seal assembly are incorporated in each stage of the multiple stage seal assembly.

**Claims**

1. A mechanical seal assembly (10 or 100) for separating a high pressure fluid and a lower pressure fluid, and associated with a rotatable shaft (12) and a stationary housing, said assembly comprising a rotatable seal ring (20) connected to said shaft; a non-rotatable seal ring connected to said housing for limited axial movement; and a plurality of coil springs (74) arranged resiliently to urge said non-rotatable seal ring axially toward said rotatable seal ring; characterized by the provision of a ring-like spring holder (78) having front and rear surfaces; a plurality of spring pockets (76) in said holder, some of which open to said front surface and some of which open to said rear surface, individual ones of said coil springs being received in said spring pockets; and means in said housing supporting said spring holder relative to said non-rotatable seal ring so that said springs are operative to urge the non-rotatable seal ring towards the rotatable seal ring.

2. A mechanical seal assembly as claimed in claim 1, characterized by means defining an annular cavity in said housing for receiving said spring holder and said springs in said spring pockets.

3. A mechanical seal assembly as claimed in claim 1 or 2, further comprising resilient means (44) connecting said rotatable ring (20) to said shaft (12).

4. A mechanical seal assembly as claimed in claim 3, characterized in that said resilient means (44, 44A, 44B, 44C) comprises elastomeric keys.

5. A mechanical seal assembly as claimed in claim 4, characterized by a cylindrical ring (42, 42A, 42B, 42C) encircling said rotatable seal ring, said cylindrical ring and said rotatable seal ring each being formed to define a plurality of transverse slots (48, 50, 48A, 50A, 48B, 50B, 48C, 50C) for receiving said elastomeric keys.

6. A mechanical seal assembly as claimed in any preceding claim, characterized by a generally cylindrical protective retainer (58, 58A, 58B, 58C) surrounding and sealed to said non-rotatable seal ring.

7. A mechanical seal assembly as claimed in claim 6, characterized by an annular member (82, 82A, 82B, 82C) abutting said protective retainer and said non-rotatable seal ring, said annular member being so constructed and arranged as to transmit spring force from said coil springs to said non-rotable seal ring.

8. A mechanical seal assembly as claimed in claim 7. characterized by a shaft sleeve (18 or 102) interposed between said seal rings and said shaft for locating said seal assembly on said shaft.

9. A multiple stage mechanical seal assembly, characterized in that each stage comprises a seal assembly as claimed in claim 8.

10. A multiple stage mechanical seal assembly as claimed in claim 8, characterized by a radial passage (116) in said non-rotatable seal ring to permit the flow of fluid from between said non-rotatable seal ring and said retainer, and thus prevent fluid pressure build-up therebetween.

**Patentansprüche**

1. Mechanische Dichtungsanordnung (10 oder 100) zur Trennung eines Hochdruckströmungsmittels und eines Niederdruckströmungsmittels, verbunden mit einer umlaufenden Welle (12) und einem stationären Gehäuse, wobei diese Anordnung einen umlaufenden Dichtungsring (20) enthält, der mit der Welle verbunden ist einen nicht umlaufenden Dichtungsring, der mit dem Gehäuse zur Ausführung einer begrenzten Axialbewegung verbunden ist, sowie eine Anzahl Spiralfedern (74), die so angeordnet sind, daß sie en nicht umlaufenden Dichtungsring elastisch axial in Richtung auf den umlaufenden Dichtungsring drücken, dadurch gekennzeichnet, daß ein ringartiger Federhalter (78) mit Vorder- und Rückseiten vorgesehen ist, sowie eine Anzahl Federtaschen (76) in dem Halter, von denen einige zu der Vorderseite hin und einige zu der Rückseite hin öffnen und einzelne der Spiralfedern in den Federtaschen aufgenommen werden, sowie Einrichtungen in dem Gehäuse zur Lagerung des Federhalters relativ zu dem nicht umlaufenden Dichtungsring, so daß die Federn in der Form wirksam, sind, daß sie den nicht umlaufenden Dichtungsring in Richtung auf den umlaufenden Dichtungsring drücken.

2. Mechanische Dichtungsanordnung nach Anspruch 1, gekennzeichnet durch Einrichtungen zur Begrenzung eines ringförmigen Hohlraums in dem Gehäuse zur Aufnahme des Federhalters und der Federn in den Federtaschen.

3. Mechanische Dichtungsanordnung nach Anspruch 1 oder 2, ferner gekennzeichnet durch elastische Einrichtungen (44), welche den umlaufenden Ring (20) mit der Welle (12) verbinden.

4. Mechanische Dichtungsanordnung nach Anspruch 3, dadurch gekennzeichnet, daß die elastischen Einrichtungen (44, 44A, 44B, 44C) elastomere Keile umfassen.

5. Mechanische Dichtungsanordnung nach Anspruch 4, gekennzeichnet durch einen zylindrischen Ring (42, 42A, 42B, 42C), welcher den umlaufenden Dichtungsring umfaßt, wobei dieser zylindrische Ring und der umlaufende Dichtungsring jeweils so ausgebildet sind, daß sie eine Anzahl quer verlaufender Schlitze (48, 50, 48A, 50A, 48B, 50B, 48C, 50C) zur Aufnahme der elastomeren Keile bilden.

6. Mechanische Dichtungsanordnung nach jedem vorhergehenden Anspruch, gekennzeichnet durch einen allgemein zylindrischen schützenden Halter (58, 58A, 58B, 58C), der den nicht umlaufenden Dichtungsring umgibt und an ihm abgedichtet ist.

7. Mechanische Dichtungsanordnung nach Anspruch 6, gekennzeichnet durch einen ringförmigen Körper (82, 82A, 82B, 82C), der gegen den schützenden Halter und den nicht umlaufenden Dichtungsring anstößt, wobei dieser ringförmige Körper so konstruiert und angeordnet ist, daß er die Federkraft von den Spiralfedern auf den nicht umlaufenden Ring überträgt.

8. Mechanische Dichtungsanordnung nach Anspruch 7, gekennzeichnet durch eine Hohlwelle (18 oder 102), die zwischen den Dichtungsringen und der Welle angeordnet ist, um die Dichtungsanordnung auf der Welle festzustellen.

9. Mehrstufige mechanische Dichtungsanordnung, dadurch gekennzeichnet, daß jede Stufe eine Dichtungsanordnung nach Anspruch 8 ent-hält.

10. Mehrstufige mechanische Dichtungsanord-nung nach Anspruch 9, gekennziechnet durch einen radialen Durchgang (116) in dem nicht umlaufenden Dichtungsring, der den Strömungsmitteldurchfluß von zwischen dem nicht umlaufenden Dichtungsring und dem Halter her zuläßt und somit einen Strömungsmitteldruckaufbau dazwischen verhindert.

## Revendications

1. Joint mécanique assemblé (10 ou 100) pour séparer un fluide à haute pression et un fluide à basse pression, et associé à un arbre rotatif (12) et à un logement fixe, cet ensemble comportant une bague d'étanchéité rotative (20) connectée à l'arbre; une bague d'étachéité non rotative connectée au logement pour déplacement axial limité; et une multitude de ressorts en spirale (74) disposés élastiquement de manière à solliciter axialement la bague d'étanchéité non rotative dans la direction de la bague d'étanchéité rotative, caractérisé par la présence d'un support (78) de ressort en forme de bague comportant des surfaces avant et arrière; une multitude d'alvéoles (76) pour ressort dans le support, dont certaines débouchent sur la surface avant et dont certains débouchent sur la surface arrière, des ressorts en spirale individuels étant reçus dans les alvéoles pour ressort; et un moyen dans le logement maintenant le support de ressort par rapport à la bague d'étanchéité non rotative de façon que les ressorts soient opérationnels afin de solliciter la bague d'étanchéité non rotative dans la direction de la bague d'étanchéité rotative.

2. Joint mécanique assemblé selon la revendication caractérisé par un moyen définissant une cavité annulaire dans le logement afin de recevoir le support de ressort et les ressorts dans les alvéoles pour ressort.

3. Joint mécanique assemblé selon la revendication 1 ou la revendication 2, comprenant en outre un moyen élastique (44) connectant la bague rotative (20) à l'arbre (12).

4. Joint mécanique assemblé selon la revendication 3, caractérisé en ce que le moyen élastique (44, 44A, 44B, 44C) comprend des clavettes en élastomère.

5. Joint mécanique assemblé selon la revendication 4, caractérisé par un bague cylindrique (42, 42A, 42B, 42C) encerclant la bague d'étanchéité rotative, la bague cylindrique et la bage d'étanchéités rotative étant chacune formées de manière à définir une multitude de fentes transversales (48, 50, 48A, 50A, 48B, 50B, 48C, 50C) pour recevoir les clavettes en élastomère.

6. Joint mécanique assemblé selon l'une quel-conque des revendications précédentes, caracté-risé par un organe de retenue de protection généralement cylindrique (58, 58A, 58B, 58C) entourant et scellé à la bague d'étanchéité non rotative.

7. Joint mécanique assemblé selon la revendication 6, caractérisé par un élément annulaire (82, 82A, 82B, 82C) butant contre l'organe de retenue de protection et la bague d'étanchéité non rotative, l'élément annulaire étant construit et disposé de façon à transmettre une force élastique des ressorts en spirale à la bague d'étanchéité non rotative.

8. Joint mécanique assemblé selon la revendication 7, caractérisé par un arbre creux (18 ou 102) interposé entre les bagues d'étanchéité et l'arbre pour positionner le joint assemblé sur l'arbre.

9. Joint mécanique assemblé à étages multiples, caractérisé en ce que chaque étage comprend un joint assemblé selon la revendication 8.

10. Joint mécanique assemblé à étage multiple selon la revendication 9, caractérisé par un passage radial (116) dans la bague d'étanchéité non rotative afin de permettre l'écoulement d'un fluide entre la bague d'étanchéité non rotative et l'organe de retenue, et éviter ainsi l'établissement entre eux d'une pression du fluide.

0 134 068

FIG-1

HIGH PRESSURE

LOW PRESSURE

FIG-2

FIG-3

FIG-1A

1

FIG-4A

FIG-4B